# EUROPEAN PATENT APPLICATION

(11) **EP 4 589 914 A1**
(43) Date of publication of application: **23.07.2025**
(21) Application number: 23864630.1
(22) Date of filing: 07.09.2023
(51) Int. Cl.: H04L 45/50, H04L 47/56, H04L 47/62

(54) **MESSAGE PROCESSING METHOD, MESSAGE TRANSMISSION METHOD, COMMUNICATION DEVICE, SYSTEM, MEDIUM, AND PRODUCT**

(30) Priority: 16.09.2022 CN 202211132210
(71) Applicant: ZTE Corporation, Shenzhen, Guangdong 518057 (CN)
(72) Inventor: LIU, Feng, Shenzhen, Guangdong 518057 (CN)
(74) Representative: Savi, Massimiliano
(86) International application number: PCT/CN2023/117510
(87) International publication number: WO 2024/055898

(57) **Abstract**

Embodiments of the present application provide a message processing method, a message transmission method, a communication device, a communication system, a storage medium, and a program product. The message processing method comprises: configuring a period label for a message (S100), wherein the period label comprises a first time period label and a second transmission time period label value, the first time period label is used for identifying a transmission period corresponding to the message at each downstream node, and the second transmission time period label value is used for identifying the transmission sub-periods of the message at a source node and a sink node; and transmitting the configured message to the downstream node (S200).

## Description

### CROSS-REFERENCE TO RELATED APPLICATION

This application is filed on the basis of Chinese patent application No. 202211132210.7 filed September 16, 2022, and claims priority to the Chinese patent application, the entire contents of which are incorporated herein by reference.

### TECHNICAL FIELD

Embodiments of the present disclosure relate to the technical field of communication, and more particularly, to a packet processing method, a packet transmission method, a communication device, a communication system, a storage medium, and a program product.

### BACKGROUND

With the use and development of wireless communication technologies in scenarios such as Internet of Vehicles (IoT) and Industrial Internet of Things (IIoT), higher requirements are posed on the quality of information transmission in wireless networks. The best-effort transmission technology provided by Ethernet cannot ensure that the delay and jitter of information transmission can meet the requirements of related application scenarios.

In the related art, technologies such as Time-Sensitive Network (TSN), Cyclic Queuing and Forwarding (CQF), and Cycle Specified Queuing and Forwarding (CSQF) can reduce the delay jitter of information transmission to a certain level. However, limited by equipment capabilities, it is difficult to further reduce the delay jitter of information transmission. Therefore, how to further reduce the delay jitter is an urgent problem to be discussed and solved.

### SUMMARY

Embodiments of the present disclosure provide a packet processing method, a packet transmission method, a communication device, a communication system, a storage medium, and a program product.

In accordance with a first aspect of the present disclosure, an embodiment provides a packet processing method, applied to a source node, the method including: configuring a period label for a packet, where the period label includes a first time period label and a second transmission time period label value, the first time period label is used for identifying a transmission period corresponding to the packet in each downstream node, and the second transmission time period label value is used for identifying a transmission sub-period of the packet in the source node and a sink node; and transmitting the configured packet to the downstream node.

In accordance with a second aspect of the present disclosure, an embodiment provides a packet processing method, applied to an intermediate node, the method including: receiving a packet, where the packet carries a period label, the period label includes a first time period label and a second transmission time period label value, the first time period label is used for identifying a transmission period corresponding to the packet in each downstream node, and the second transmission time period label value is used for identifying a transmission sub-period corresponding to the packet in a sink node; and transmitting the packet according to the first time period label.

In accordance with a third aspect of the present disclosure, an embodiment provides a packet processing method, applied to a sink node, the method including: receiving a packet, where the packet carries a period label, the period label includes a first transmission time period label value and a second transmission time period label value, the first transmission time period label value is used for identifying a transmission period corresponding to the packet in the sink node, and the second transmission time period label value is used for identifying a transmission sub-period corresponding to the packet in the sink node; and transmitting the packet according to the first transmission time period label value and the second transmission time period label value.

In accordance with a fourth aspect of the present disclosure, an embodiment provides a packet processing method, applied to a sink node, the method including: storing a packet according to a first period configuration; transmitting the packet according to a first transmission time period label value; storing the transmitted packet according to a second period configuration to form a first queue for receiving the packet and a second queue for transmitting the packet; determining a transmission sub-period corresponding to the queues according to a second transmission time period label value; and transmitting the packet in the transmission sub-period.

In accordance with a fifth aspect of the present disclosure, an embodiment provides a packet transmission method, including: configuring, by a source node, a period label for a packet, where the period label includes a first time period label and a second transmission time period label value, the first time period label is used for identifying a transmission period corresponding to the packet in each downstream node, and the second transmission time period label value is used for identifying a transmission sub-period of the packet in the source node and a sink node; and transmitting, by the source node, the packet; receiving, by an intermediate node, the packet; obtaining, by the intermediate node, a transmission period corresponding to the packet in the intermediate node according to the first time period label; transmitting, by the intermediate node, the packet in the transmission period corresponding to the packet in the intermediate node; receiving, by the sink node, the packet; obtaining, by the sink node, a transmission sub-period corresponding to the packet in the sink node according to the first time period label and the second transmission time period label value; and transmitting, by the sink node, the packet in the transmission sub-period.

In accordance with a sixth aspect of the present disclosure, an embodiment provides a communication device, including: a memory, a processor, and a computer program stored in the memory and executable by the processor, where the computer program, when executed by the processor, causes the processor to implement the packet processing method in accordance with the first aspect, the second aspect, the third aspect, or the fourth aspect.

In accordance with a seventh aspect of the present disclosure, an embodiment provides a communication system, including: at least one processor; and at least one memory, configured for storing at least one program, where the at least one program, when executed by the at least one processor, causes the at least one processor to implement the packet transmission method in accordance with the fifth aspect.

In accordance with an eighth aspect of the present disclosure, an embodiment provides a computer-readable storage medium, storing computer-executable instructions which, when executed by a processor, causes the processor to implement the packet processing method in accordance with the first aspect, the second aspect, the third aspect, or the fourth aspect or the packet transmission method in accordance with the fifth aspect.

In accordance with a ninth aspect of the present disclosure, an embodiment provides a program product, including a computer program or computer instructions stored in a computer-readable storage medium, where the computer program or computer instructions, when read from the computer-readable storage medium and executed by a processor of a computer device, causes the computer device to execute the packet processing method in accordance with the first aspect, the second aspect, the third aspect, or the fourth aspect or the packet transmission method in accordance with the fifth aspect.

### BRIEF DESCRIPTION OF DRAWINGS

FIG. 1 is a schematic flowchart of packet processing performed by an Ethernet device using a store-and-forward mode in the related art;
FIG. 2 is a schematic flowchart of packet transmission using CQF in a TSN technology;
FIG. 3 is a schematic diagram of a time period label value 4000 carried in a packet;
FIG. 4 is a schematic flowchart of data transmission using CSQF;
FIG. 5 is a schematic diagram of a correspondence relationship between time period label values of a packet among devices;
FIG. 6 is a flowchart of a packet processing method according to an embodiment of the present disclosure;
FIG. 7 is a schematic diagram of a packet processing method according to another embodiment of the present disclosure;
FIG. 8 is a schematic diagram of a packet processing method according to an embodiment of the present disclosure;
FIG. 9 is a schematic diagram of a packet in a sub-period according to an embodiment of the present disclosure;
FIG. 10 is a flowchart of a packet processing method according to an embodiment of the present disclosure;
FIG. 11 is a flowchart of a packet processing method according to an embodiment of the present disclosure;
FIG. 12 is a flowchart of a packet processing method according to an embodiment of the present disclosure;
FIG. 13 is a schematic diagram of a second transmission time period label value carried in a packet according to an embodiment of the present disclosure;
FIG. 14 is a schematic diagram of packet forwarding according to an embodiment of the present disclosure;
FIG. 15 is a schematic diagram of packet forwarding according to an embodiment of the present disclosure; and
FIG. 16 is a schematic structural diagram of a communication device according to an embodiment of the present disclosure.

### DETAILED DESCRIPTION

To make the objects, technical schemes, and advantages of the present disclosure clearer, the present disclosure is described in further detail in conjunction with accompanying drawings and embodiments. It should be understood that the embodiments described herein are merely used for illustrating the present disclosure, and are not intended to limit the present disclosure.

It should be noted that although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

In the description of the embodiments of the present disclosure, unless otherwise explicitly defined, the terms such as "configure", "install/mount" and "connect" should be understood in a broad sense, and those having ordinary skills in the art can reasonably determine the specific meanings of the above terms in the embodiments of the present disclosure based on the specific contents of the technical schemes.

In the embodiments of the present disclosure, any embodiment or design described following the terms such as "in an embodiment," "in some embodiments," and "for example" is used to indicate examples, explanations, or illustrations, and should not be construed as being superior or advantageous over other embodiments or designs. The use of the terms such as "in an embodiment," "in some embodiments," and "for example" is intended to present the relevant concepts.

Embodiments of the present disclosure relate to a technology for information transmission/transfer in a communication network. Delay and jitter are important performance indicators for information transmission. Different application scenarios have different requirements for information transmission quality, such as transmission delay and jitter. Different methods of information transmission may lead to different delays and jitters.

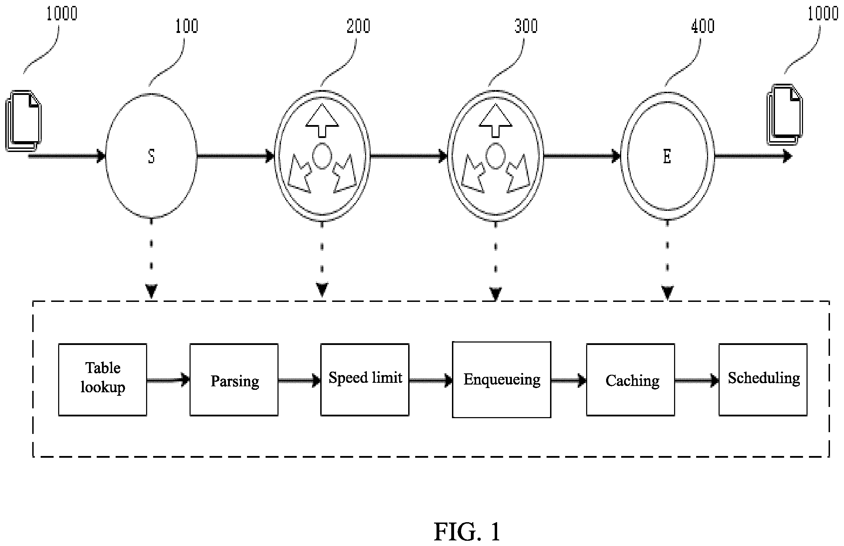

FIG. 1 is a schematic flowchart of packet processing performed by an Ethernet device using a store-and-forward mode in the related art. As shown in FIG. 1, a packet 1000 is respectively processed by a plurality of functional modules such as table lookup, parsing, speed limit, enqueueing, caching, scheduling, etc., in each node, e.g., in a first device 100, a second device 200, a third device 300, and a fourth device 400. It should be noted that the packet may be processed or not processed by each node, and packets at different nodes in the embodiments of the present disclosure may carry the same or different information or contents.

In some embodiments, the first device 100 may be a source node, the second device 200 and the third device 300 may be intermediate nodes, and the fourth device 400 may be a sink node. Packets of all physical ports in the devices share these functional modules, so the time at which the packets of each physical port obtain service from these functional modules is uncertain, and the processing of the packets is not completed at the same moment, leading to an uncertain delay of the packets in each device. With the extensive use of Ethernet technology in industrial production lines and vehicles, higher requirements are posed on the transmission quality of packets. The transmission delay and jitter of the packet transmission mode shown in FIG. 1 cannot meet requirements on related parameter indicators.

In some network systems, e.g., an automated production line network in an industrial park or an in-vehicle communication network in a vehicle, Ethernet technology is replacing proprietary fieldbus technology because Ethernet supports higher data rates, requires lower costs, and is easier to integrate with conventional Ethernet device systems. However, in the related art, Ethernet technology forwards packets based on the idea of best effort, which cannot meet the requirements on end-to-end delay, jitter, zero packet loss, and other characteristics of packet transmission in specific application scenarios. To reduce the delay and jitter of Ethernet-based packet transmission, the TSN task group has formulated a set of Ethernet service transmission and processing standards, which can realize the deterministic transmission of services or packets. However, TSN is only suitable for local area networks in industrial plants, in-vehicle systems, and other scenarios with small physical space. The Deterministic Networking (DetNet) working group of the Internet Engineering Task Force (IETF) has proposed a CSQF technology to extend the principle of CQF in TSN technology to deterministic wide-area networks to meet the requirements of transmission of deterministic services or packets in long-distance physical scenarios.

To illustrate the present technical scheme in detail, the related technologies TSN, CQF, and CSQF are further described below. Technologies related to information transmission in the embodiments of the present disclosure will be described below using the transmission of a customer service such as a packet in each device as an example. TSN technology is applied to local area network, in which a global scheduling schedule is configured, the customer packet is scheduled and forwarded through a fixed time slice, to meet the requirements for deterministic delay jitter. All network devices in the local area network are located in a small physical space, and the link propagation delay of packets between the devices can be ignored. A time-sensitive network requires time synchronization between all devices on the network, where upstream and downstream devices operate synchronously. When a packet is transmitted from an upstream device, a downstream device receives the packet at the same moment, i.e., the upstream and downstream devices transmit and receive the customer packet at the same moment. In TSN technology, CQF is used to realize packet forwarding with deterministic delay.

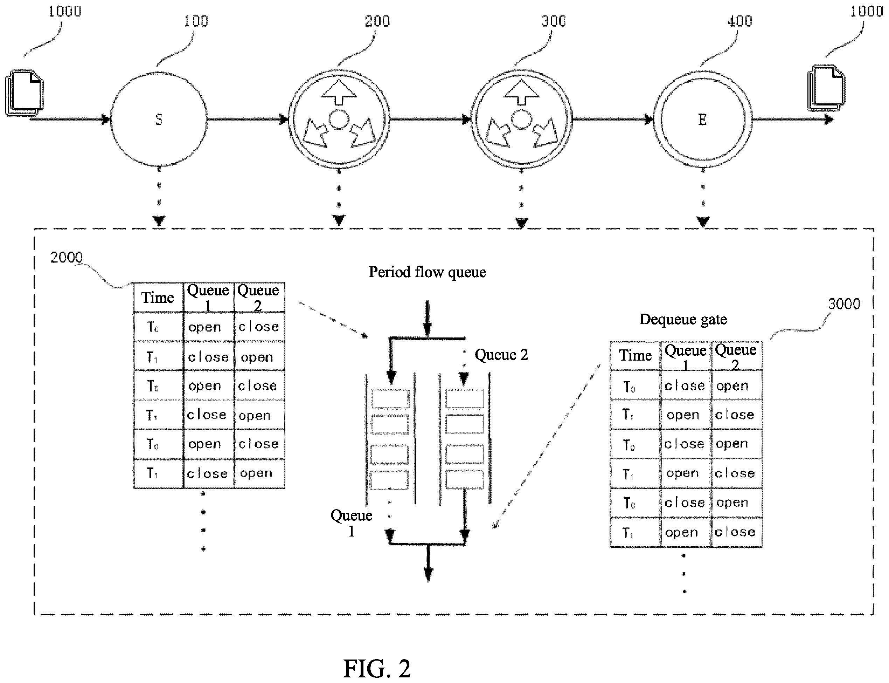

FIG. 2 is a schematic flowchart of packet transmission using CQF in a TSN technology. As shown in FIG. 2, two queuing queues, e.g., queue 1 and queue 2, are set at an output port of each device to form a period flow queue. An enqueue control gate 2000 and a dequeue control gate 3000 are respectively set at an enqueue position and a dequeue position of each queue. Each control gate has two states: "open" (marked as open in the figure) or "closed" (marked as close in the figure).

When the gate is open, packet input or output is allowed. When the gate is closed, packet input or output is not allowed. The states of the enqueue control gate and the dequeue control gate of the same queue remain different. In other words, when the enqueue control gate of the queue is open, the dequeue control gate of the queue is closed; when the enqueue control gate of the queue is closed, the dequeue control gate of the queue is open. Two queues are set for each port. At any moment, there is one queue for receiving packets and one queue for transmitting packets. Therefore, control gates of ports of the same type in the two queues (e.g., output ports of the queues) are also in different states, e.g., in mutually exclusive states. In other words, when a control gate of a port (e.g., an output port) in one queue is open, a control gate of a port of the same type in the other queue is closed. At any moment, only the control gate of one queue in the port is open and is allowed to output packet information, while the control gate of the other queue is closed and is not allowed to output information.

The CQF mechanism divides the transmission time into a series of equal time intervals (or referred to as time slices). Each time interval is called one time period T, and all time periods T are divided into even periods and odd periods, which are distinguished by identifiers T₀ and T₁. The state, e.g., the open or closed state, of each control gate in each time period is configured in advance in the network system. During one period, the states of the control gates remain unchanged. After a time period ends, the control gate originally in the open state is switched to the closed state to stop the corresponding queue from outputting packet information, and the control gate of the other queue is switched to the open state to allow the other queue to start outputting packet information. By alternately performing the enqueue operation and the dequeue operation between the two queues, the CQF can ensure that a data packet transmitted from an upstream node device in one time period will arrive at a downstream node device in the same time period. The downstream node device receives the data packet in the same time period and then forwards the data packet in the same time period. The transmission period described in the embodiments of the present disclosure is a time period in which the packet is transmitted.

When all devices on the network adopt CQF queues, all the devices are time-synchronized, and states of all control gates in all the devices are configured in advance, and are switched at the same moment. As such, when a packet is forwarded starting from the first device on the network, e.g., a source node/device, and all packets forwarded in the same period are forwarded in each device, e.g., intermediate node/device, in a fixed time period T. The forwarding of the packet is delayed on each device by one time period T until the forwarding of the packet on the last device, e.g., sink node/device.

An end-to-end delay of a packet on the network depends only on the size of the period T and the number H of devices through which the packet passes on the network. Since all packets in the same period are always forwarded in the same period in the forwarding process, the packets in the same period in the source device are output in the sink device in the same period. The packet may fluctuate at any position in the same time period T, which may be as early as a start position of one period T, or as late as an end position of one period T. When the packet is forwarded at the start position of the time period in the source device, but is forwarded and output at the end position of the time period T in the sink device, the total forwarding delay of the packet in the network reaches a maximum, which is expressed as (H+1)*T. When the packet is forwarded at the end position of the time period in the source device, but is forwarded and output at the start position of the time period T in the sink device, the total forwarding delay of the packet in the network reaches a minimum, which is expressed as (H-1)*T. Therefore, the total end-to-end forwarding delay of the packet from the source device to the sink device in the network fluctuates in the range of {(H-1)*T, (H+1)*T}. The use of the CQF technology in a local area network can provide deterministic delay forwarding, thereby realizing bounded delay and jitter of packets forwarded in the network.

However, the CQF method requires time synchronization of all devices on the network, all devices switch the states of the control gates at the same time, and the transmission delay between devices can be regarded as zero. Therefore, the CQF method is only suitable for local area network scenarios with small physical space.

When the distance between devices is long, the link delay is large, or the delay of the packet on the link is close to the length of the period, it cannot be ensured that a packet transmitted from an upstream device can be received by a downstream device within the same period, even if all devices switch the control gates at the same time. Therefore, even if the CQF mechanism is used in the TSN technology for packet transmission, the deterministic long-distance and cross-regional transmission of packets cannot be ensured.

Since the TSN technology is not suitable for network systems with large physical space, the IETF DetNet working group has proposed the CSQF mechanism. The CSQF technology can further reduce the impact of time synchronization between devices and the transmission delay of the link between devices. As such, the application of the TSN forwarding mechanism in a deterministic wide-area network can be achieved.

The CSQF forwarding mechanism does not require time synchronization of all devices on the network, but only requires clock frequency synchronization between the devices. In other words, a device receiving a packet recovers a clock signal of the packet to track a clock frequency of the device transmitting the packet. The CSQF mechanism requires functions such as clock frequency synchronization in the entire network, multi-queue cyclic queuing and forwarding at egress ports, and period label mapping of egress ports of adjacent nodes.

In the CSQF technology, all packets are required to carry a transmission time period label value when transmitted by the source node device. Packets in a time period carry the same transmission time period label value, indicating that the packets are received and forwarded together in the same time period. The source node device adds a transmission time period label value in the packet to be transmitted, and the transmission time period label value may be at any position in the packet.

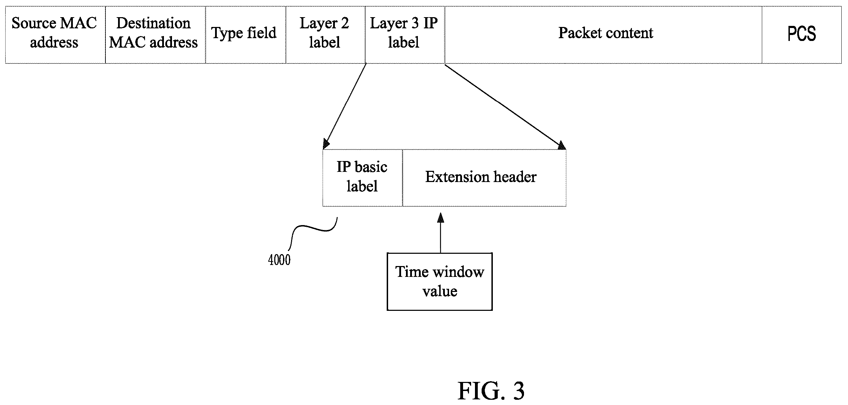

FIG. 3 is a schematic diagram of a transmission time period label value 4000 carried in a packet. As shown in FIG. 3, the packet carries the transmission time period label value in a Layer 3 extension field. An intermediate node device receives and forwards packets having the same transmission time period label value in the same period T. The intermediate node device may change the transmission time period label value, but for all packets having the same transmission time period label value before the change, the packets still need to have the same transmission time period label value after the change. The first transmission time period label value in the embodiments of the present disclosure is used for identifying a transmission period that the packet is within, to indicate a time period in which the packet is forwarded.

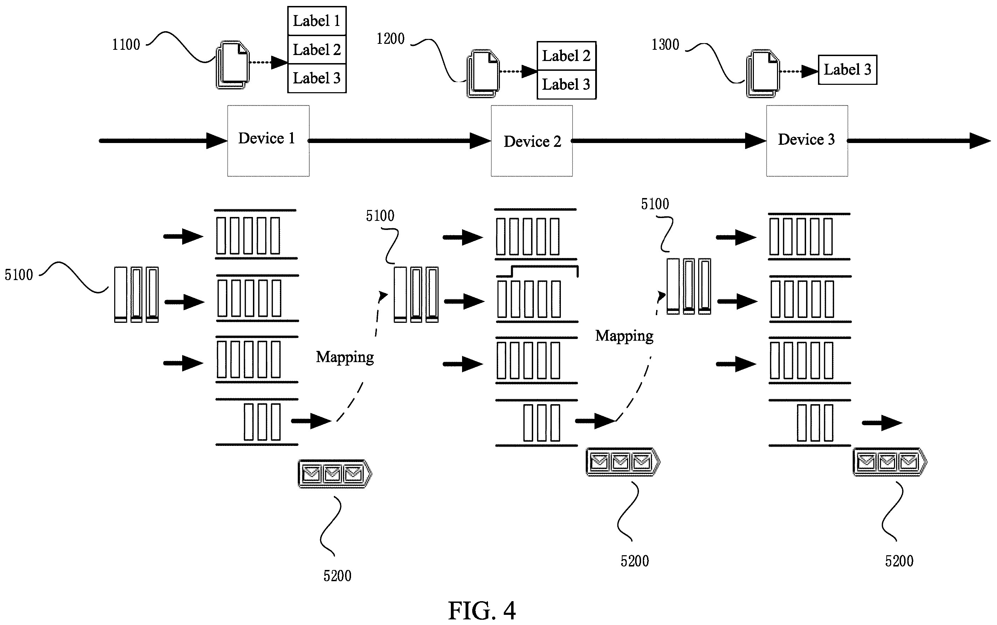

FIG. 4 is a schematic flowchart of data transmission using CSQF. As shown in FIG. 4, time synchronization is not required among all devices in the network, only clock frequency synchronization among the devices is required. In each device, operation states of queues are switched according to a fixed-size period. The period size is the same for all devices. Although time periods of the devices are independent of each other, and are switched at different moments (i.e., the start time and the end time of the period varies with different devices), the devices have the same clock frequency, so the frequency of time period switching is the same for each device, and the number of times of time period switching per unit time is the same for each device.

A plurality of cache queues are set in each device, and the cache queue to which a packet is to be cached is determined according to a time label value carried in the packet. Packets having the same time period value enter the same queue. All the queues are in different states in each period, and the states of all the queues are changed in turn. In any time period, only one queue is in a transmit state, where the queue in the transmit state only transmit packets but does not receive packets; other queues are in a receive state, where the queue in the receive state only receives packets but does not transmit packets. The states of all the queues are cyclically switched according to time periods. In any time period, one of the queues is in the transmit state, and the other queues are in the receive state.

Before a packet is transmitted, all node devices determine a period mapping relationship of their respective queues. When the packet is forwarded in the source node device, the packet carries a transmission time period label value corresponding to each device, where the transmission time period label value indicates a receive queue specified for the packet in a specified device. After the packet is forwarded by a device, the corresponding transmission time period label value that has been used is removed.

As shown in FIG. 4, a first packet 1100 in a device 1 carries a label 1, a label 2, and a label 3. After the first packet 1100 passes through the device 1 to the device 2, the label 1 is removed from the first packet 1100 to obtain a second packet 1200. After the second packet 1200 passes through the device 2 to the device 3, the label 2 is removed from the second packet 1200 to obtain a third packet 1300. When each device receives a packet, the device extracts a transmission time period label value carried in the packet, puts the packet into a designated receive queue according to the transmission time period label value, and when the receive queue is switched into a transmit queue, forwards and outputs the packet to a next hop device. The packet carries in advance a receive queue specified in each hop device, such that the packet is received in the specified queue and forwarded in a specified time period (forwarded when the receive queue is switched into a transmit queue). Because the packet is forwarded in each device in a fixed period, a fixed end-to-end forwarding delay of the customer packet is achieved.

When the CSQF mechanism is working, the network system plans a transmission path, delay, bandwidth, and queue resources of a packet in advance according to service quality requirements of service transmission, determines a period parameter, generates a forwarding period label for each node device, and distributes the forwarding period labels to the corresponding node devices. When the source device sends packet, the packet carries a forwarding period label value of the packet in each node. Each node device determines, according to the forwarding period label, a queue to be used for forwarding the packet. The clock frequencies of all the node devices on the network are synchronized, the time period switching of all the node devices is the same, the switching speeds of queue states are the same, and the receive state and the transmit state of all queues are changed according to a fixed frequency. A packet is transmitted in a fixed queue of an upstream node device, enters a corresponding fixed queue in the downstream node, and is transmitted and outputted after the corresponding queue is switched to the transmit state.

No matter how long an optical fiber delay between the upstream and downstream devices is, it is only necessary to properly plan in advance a relationship between a forwarding period of the packet transmitted by the upstream device and a forwarding period of the downstream device, such that a customer packet forwarded by the upstream device can enter a complete receive queue in the downstream device, and reception of all packets in the forwarding period of the upstream device can be completed before the specified receive queue is switched to the transmit state. The downstream device has many receive queues, to meet various delay requirements between the upstream and downstream devices. It is only necessary to select an appropriate receive queue to receive the packet forwarded from the upstream device wait for the selected receive queue to switch to the transmit state, and then forward and output the packet. The packet is forwarded in each upstream device in a fixed transmission period, and then forwarded and transmitted in the downstream device in a new fixed forwarding transmission period. Therefore, the total forwarding delay of the packet from the first device, i.e., the source device to the last device, i.e., the sink device is fixed, such that the end-to-end forwarding of the packet from the source node device to the sink node device in the network with deterministic delay can be achieved.

As shown in FIG. 4, when the network source node device 1 transmits the packet 1100, the packet 1100 carries a transmission time period label value corresponding to each device, e.g., the label 1, the label 2, and the label 3. After receiving the packet, each device removes the transmission time period label value that has been used. For example, after receiving the packet, the device 2 removes the label 1 that has been used to obtain the packet 1200, and forwards the packet 1200 according to the transmission time period label value corresponding to the device 2.

With the above method, the end-to-end forwarding of the packet with deterministic delay can be achieved. However, since the packet transmitted by the device 1 carries the transmission time period label values required for forwarding by all the devices, the effective bearer efficiency of the packet is low.

Since all the transmission time period label values carried in the packet transmitted by the device 1 are in the same format and the contents of the transmission time period label values have been determined, there is a one-to-one correspondence relationship between the transmission time period label values. It is feasible to transmit a correspondence between the transmission time period label value 1 and the transmission time period label value 2 to the device 2, transmit a correspondence between the transmission time period label value 2 and the transmission time period label value 3 to the device 3, and so on. In this way, the packet transmitted by the device may only need to carry the transmission time period label value 1 of the device itself. After receiving the packet, the device 2 can obtain the transmission time period label value 2 according to the transmission time period label value 1 and the correspondence relationship between the transmission time period label value 1 and the transmission time period label value 2 in the packet, and change the transmission time period label value 1 carried in the packet to the transmission time period label value 2, thus obtaining the transmission time period label value 2 corresponding to the packet in the device 2. With the above method, only one transmission time period label value needs to carried, and transmission time period label values corresponding to downstream nodes can be obtained according to the transmission time period label value.

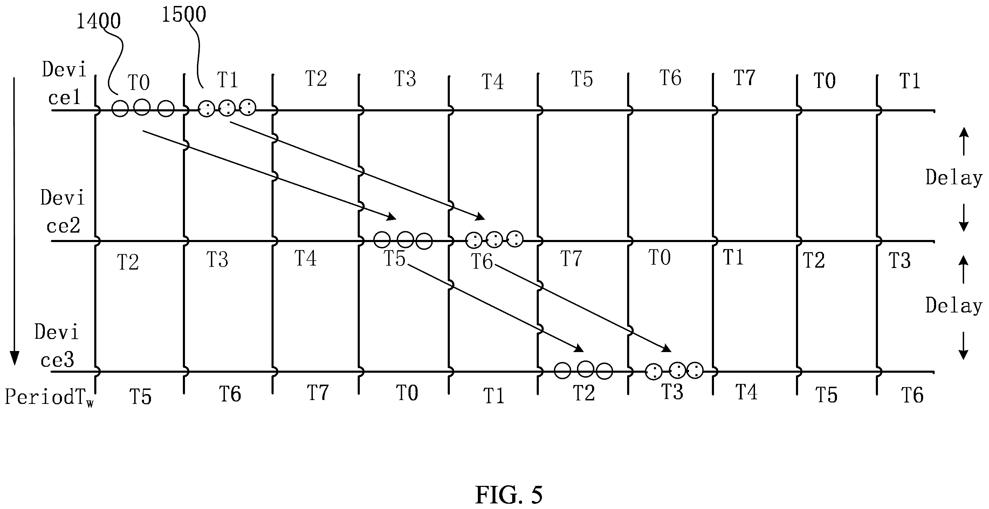

FIG. 5 is a schematic diagram of a correspondence relationship between transmission time period label values of a packet among devices. As shown in FIG. 5, a transmission time period label value of T0 of a packet in a device 1 corresponds one-to-one to a transmission time period label value of T5 in a device 2, a transmission time period label value of T1 of the packet in the device 1 corresponds one-to-one to a transmission time period label value of T6 in the device 2, and so on. In this way, a fourth packet 1400 of the device 1 is forwarded in the device 1 according to a period T0, and carries a transmission time period label value which is T0. When the fourth packet 1400 is transmitted to the device 2, the device 2 changes the transmission time period label value of T0 carried in the packet to T5 according to the correspondence relationship, and transmits the fourth packet 1400 in a period T5 in the device 2. Similarly, a transmission time period label value of T5 of the packet in the device 2 corresponds one-to-one to a transmission time period label value of T2 in the device 2, a transmission time period label value of T6 of the packet in the device 2 corresponds one-to-one to a transmission time period label value of T3 in a device 3, and so on. When the fourth packet 1400 in the device 2 is transmitted to the device 3 according to the period T5, the device 3 changes the transmission time period label value of T5 carried in the packet to T2 according to the correspondence relationship, and transmits the fourth packet 1400 in a period T2 in the device 3. The process of forwarding a fifth packet 1500 is similar that described above. Regardless of the manner in which the packet carries the transmission time period label value, all packets carrying the same time period label are forwarded in the same time period, such that the deterministic forwarding of the packets is achieved.

For both the TSN technology and the CSQF technology, the packet can fluctuate within only one time period, and the fluctuation range of the forwarding delay is not greater than the time period T. To reduce the delay jitter (fluctuation) of the packet, the size of the forwarding period T of all devices on the network needs to be reduced. When the forwarding period T becomes smaller, it means that the length of one forwarding period becomes shorter. When the transmission bandwidth of a physical port of a device is small and the packet length is very long, only a small number of packets can be forwarded in one forwarding period. In a scenario where the packet length is very long and the forwarding period is very short, only one long packet can be carried in one period, resulting in low bearer efficiency of the network. Therefore, the forwarding period T should not be set to be too small. In many scenarios, due to the forwarding capability of some devices on the network, the minimum forwarding period T usually has a lower limit. In some cases, the lower limit still cannot meet the requirements of some packets.

For example, in FIG. 1, it is assumed that the minimum forwarding period of the device 1, the device 2, and the device 4 can reach 20 us, but the minimum forwarding period of the device 3 is 100 us. In this case, when a packet is forwarded from the device 1 to the device 4, the minimum forwarding period of the end-to-end bearer on the network can only be 100 us. If a packet requires a very small forwarding jitter and a forwarding period of not greater than 20 us, the bearer capacity on the network cannot meet the requirements.

To further reduce the end-to-end delay jitter of packet transmission, embodiments of the present disclosure provide a packet processing method, a packet transmission method, a communication device, a communication system, a storage medium, and a program product. In an information transmission process, for example, a period label is carried in a packet, where the period label includes a first time period label and a second transmission time period label value. An intermediate node/device forwards the packet according to the first time period label. A sink node/device forwards the packet according to the first time period label and the second transmission time period label value, to realize lower delay, jitter, or even zero jitter or delay. As such, the delay and jitter during packet forwarding can be reduced, thereby achieving the deterministic transmission of services.

The embodiments of the present disclosure will be further described in detail below in conjunction with the accompanying drawings.

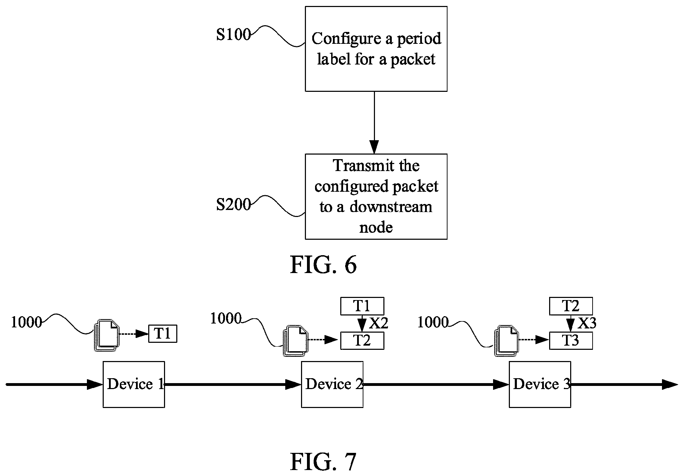

FIG. 6 is a flowchart of a packet processing method according to an embodiment of the present disclosure. As shown in FIG. 6, the packet processing method may be applied to, for example, but not limited to, a source node/device. In the embodiment shown in FIG. 6, the packet processing method may include, but not limited to, the following steps S100 and S200.

At S100, a period label is configured for a packet, where the period label includes a first time period label and a second transmission time period label value, the first time period label is used for identifying a transmission period corresponding to the packet in each downstream node, and the second transmission time period label value is used for identifying a transmission sub-period of the packet in a source node and a sink node. The transmission sub-period of the sink node is within the transmission period of the sink node.

In an embodiment, the first time period label includes a first transmission time period label value Tn corresponding to each downstream node. The first transmission time period label value Tn identifies a transmission period corresponding to the packet in the corresponding node. Each node/device determines a period in which the packet transmission moment is located according to Tn.

In another embodiment, the first time period label includes a first transmission time period label value T1 corresponding to the source node. Period mapping information Xn is respectively pre-configured for each downstream node. A transmission period corresponding to the packet in the current node is determined according to the corresponding first transmission time period label value Tn and the pre-configured period mapping information Xn of the current node. The technical schemes of this embodiment will be described below using FIG. 7 as an example.

In this embodiment, it is determined according to the first time period label and the second transmission time period label value that the transmission moment of the packet is within the transmission sub-period of the transmission period of the source node, and that the transmission moment of the packet is within the transmission sub-period of the transmission period of the sink node. Since the packet transmission modes of the source node/device and the sink node/device are the same, it can be ensured that transmission of the packet in the source device and transmission of the packet in the sink device are within the same sub-period, thereby avoiding the impact of the intermediate device on the delay and jitter of packet transmission.

FIG. 7 is a schematic diagram of a packet processing method according to another embodiment of the present disclosure. As shown in FIG. 7, period mapping information X2 and X3 are respectively pre-configured for a device 2 and a device 3. A device 1 (source node) receives a packet 1000. A period label carried in the packet 1000 includes a transmission time period label value T1. The device 1 transmits the packet to the device 2 (intermediate node) in a corresponding transmission period according to the period label value T1. The device 2 receives the packet 1000 carrying the period label value T1. The device 2 obtains a period label T2 corresponding to the current node according to the period label value T1 and the pre-configured period mapping information X2. The device 2 transmits the packet to the device 3 (sink node) in a corresponding transmission period according to the period label value T2. The device 3 receives the packet 1000 carrying the period label value T2. The device 3 obtains a period label T3 corresponding to the current node according to the period label value T2 and the pre-configured period mapping information X3. The device 3 transmits the packet in a corresponding transmission period according to the period label value T3.

At S200, the configured packet is transmitted to the downstream node.

In an embodiment, the packet processing method may further include the following steps S111 and S120.

At S111, the transmission period corresponding to the packet in each downstream node is obtained according to the first transmission time period label value Tn corresponding to the downstream node.

Using FIG. 7 as an example, according to the transmission time period label value T1 corresponding to the source node, the transmission period corresponding to the packet in the source node can be obtained. According to the transmission period T2 corresponding to the intermediate node, the transmission period corresponding to the packet in the intermediate node can be obtained. According to the transmission period T3 corresponding to the sink node, the transmission period corresponding to the packet in the sink node can be obtained.

At S120, the transmission sub-period corresponding to the packet in the sink node is obtained according to the second transmission time period label value tn. The transmission sub-period corresponding to the sink node is within the transmission period corresponding to the sink node.

For example, the sink node may obtain the transmission period corresponding to the packet in the sink node according to the corresponding first transmission time period label value Tn, and then obtain the transmission sub-period of the transmission period corresponding to the packet in the sink node according to the second transmission time period label value tn. With this exemplary method, the transmission of packets in the network with smaller delay and jitter can be achieved.

In another embodiment, the packet processing method may further include the following steps S112 and S120.

At S112, the transmission period corresponding to the packet in each downstream node is obtained according to the first transmission time period label value Tn of the downstream node and the period mapping information X of the downstream node.

Using FIG. 7 as an example, the intermediate node can obtain the transmission time period label T2 corresponding to the current intermediate node according to the transmission time period label value T1 carried in the packet transmitted from the source node and the period mapping information X2 of the intermediate node. The sink node can obtain the transmission time period label T3 corresponding to the sink node according to the period label value T2 carried in the packet transmitted from the intermediate node and the period mapping information X3 of the sink node.

At S120, the transmission sub-period corresponding to the packet in the sink node is obtained according to the second transmission time period label value tn.

For example, the sink node can obtain the transmission period corresponding to the packet in the sink node according to the corresponding first transmission time period label value Tn and the corresponding period mapping information Xn, and then obtain the transmission sub-period of the transmission period corresponding to the packet in the sink node according to the second transmission time period label value tn.

It should be noted that the transmission period corresponding to the packet in the source node may also be determined according to the first transmission time period label value, and the transmission sub-period of the transmission period corresponding to the packet in the source node may also be determined according to the second transmission time period label value. With the above method, the moment at which the sink node receives the client packet and the moment at which the source node receives the client packet are controllable and are not affected by the delay and jitter of the intermediate device.

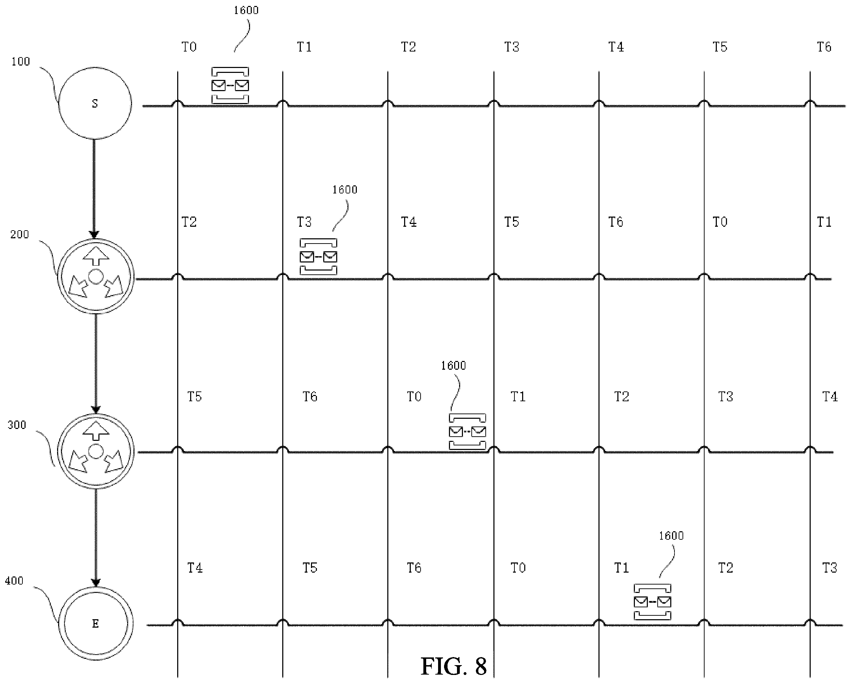

FIG. 8 is a schematic diagram of a packet processing method according to an embodiment of the present disclosure. As shown in FIG. 8, a period label is configured for a sixth packet 1600. The period label includes a first time period label and a second transmission time period label value.

In an implementation, the first time period label is at least used for identifying transmission periods corresponding to the sixth packet 1600 in a second device 200, a third device 300, and a fourth device 400 downstream of a first device 100, respectively. For example, the first time period label includes first transmission time period label values T3, T0, and T1. The first transmission time period label value T3 identifies that the sixth packet 1600 is transmitted in the second device 200 in a period T3, i.e., T3 is the corresponding transmission period. The first transmission time period label value T0 identifies that the sixth packet 1600 is transmitted in the third device 300 in a period T0, i.e., T0 is the corresponding transmission period. The first transmission time period label value T1 identifies that the sixth packet 1600 is transmitted in the fourth device 400 in a period T1, i.e., T1 is the corresponding transmission period.

In another exemplary implementation, period mapping information X2, X3, and X4 are respectively pre-configured for the second device 200, the third device 300, and the fourth device 400 downstream of the first device 100. The first time period label is used for identifying a transmission period corresponding to the sixth packet 1600 in the first device 100. For example, the first time period label includes a first transmission time period label value T0. The second device 200 obtains a first transmission time period label value T3 corresponding to the second device 200 according to the first transmission time period label value T0 and the period mapping information X2 of the second device 200. The third device 300 obtains a first transmission time period label value T0 corresponding to the third device 300 according to the first transmission time period label value T3 and the period mapping information X3 of the third device 300. The fourth device 400 obtains a first transmission time period label value T1 corresponding to the fourth device 400 according to the first transmission time period label value T0 and the period mapping information X4 of the fourth device 400.

The transmission period T1 corresponding to the packet 1600 in the sink node can be obtained by each of the different methods described above. When the transmission period T1 corresponding to the sixth packet 1600 in the sink node is determined, the transmission sub-period corresponding to the packet 1600 in the sink node can be further determined according to the second transmission time period label value tn.

In this implementation, the period label is carried in the packet, and the intermediate node device forwards the packet according to the first time period label, such that the requirements of delay jitter indicators in a coarse range are met. In addition, the sink node device forwards the packet according to the first time period label and the second transmission time period label value, such that delay jitter in a smaller range can be achieved. As such, the delay jitter during packet forwarding can be reduced, thereby achieving the deterministic transmission of services.

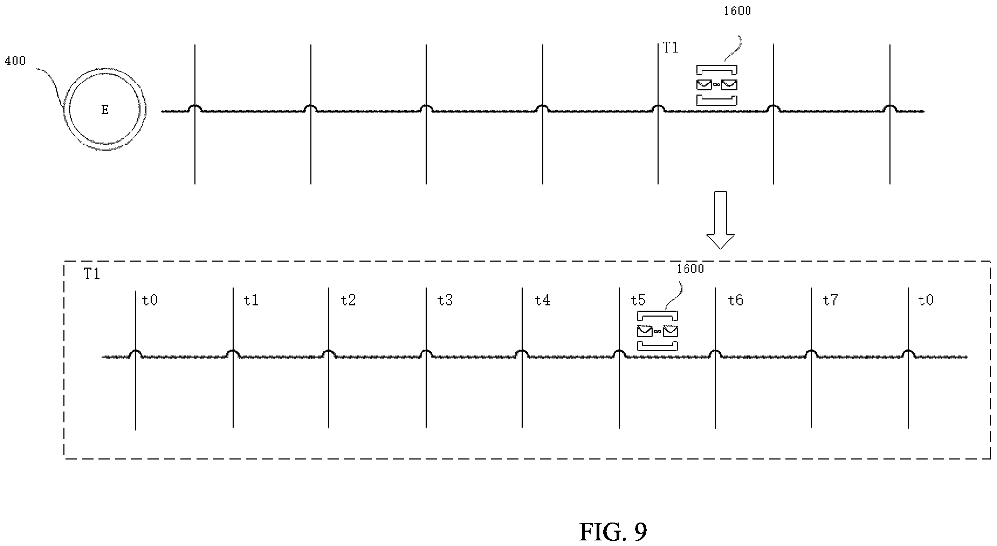

FIG. 9 is a schematic diagram of a packet in a sub-period according to an embodiment of the present disclosure. As shown in FIG. 9, the first transmission time period label value is T1. The period T1 is further divided into eight sub-periods. The second transmission time period label value is t4. According to the first transmission time period label value T1, it is determined that the sixth packet 1600 is within the transmission period T1. According to the second transmission period label t4, the transmission sub-period t4 of the transmission period T1 of the sixth packet 1600 is determined.

In this implementation, the period label including the first transmission time period label value and the second transmission time period label value is carried in the packet, and the intermediate node device forwards the packet according to the first transmission time period label value, such that the requirements of delay jitter indicators in a coarse range are met. In addition, the sink node device forwards the packet according to the first transmission time period label value and the second transmission time period label value, such that delay jitter in a smaller range can be achieved. As such, the delay jitter during packet forwarding can be reduced, thereby achieving the deterministic transmission of services.

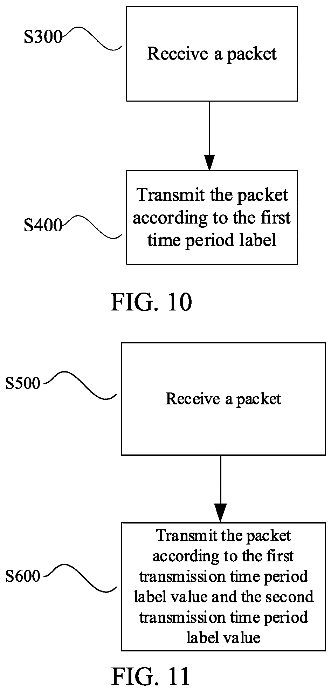

FIG. 10 is a flowchart of a packet processing method according to an embodiment of the present disclosure. As shown in FIG. 10, the packet processing method may be applied to, for example, but not limited to, an intermediate node/device. In the embodiment shown in FIG. 10, the packet processing method may include, but not limited to, the following steps S300 and S400.

At S300, a packet is received, where the packet carries a period label, the period label includes a first time period label and a second transmission time period label value, the first time period label is used for identifying a transmission period corresponding to the packet in each downstream node, and the second transmission time period label value is used for identifying a transmission sub-period corresponding to the packet in a sink node. The transmission sub-period of the sink node is within the transmission period of the sink node.

In an implementation, the first time period label includes a first transmission time period label value Tn corresponding to each downstream node. The first transmission time period label value Tn identifies a transmission period corresponding to the packet in each downstream node. Each node/device determines a period in which the packet transmission moment is located according to Tn.

The first time period label may include a first transmission time period label value corresponding to each downstream node corresponding to the current node, and may also include a first transmission period label value corresponding to the current node. If the current node is a source node, the first time period label also includes a first transmission time period label value corresponding to the source node. If the current node is an intermediate node, the first time period label includes a first transmission time period label value corresponding to the current intermediate node. If the current node is a sink node, the first time period label includes a first transmission time period label value corresponding to the sink node.

At S400, the packet is transmitted according to the first time period label.

In an embodiment, S400 may include the following steps S410 and S420.

At S410, the transmission period corresponding to the packet in each downstream node is obtained according to the first transmission time period label value corresponding to the downstream node.

At S420, the intermediate node transmits the packet in the transmission period corresponding to the packet in the intermediate node.

In another embodiment, the packet processing method may further include the following steps S430 and S420.

At S430, the transmission period corresponding to the packet in each downstream node is obtained according to the first transmission time period label value and the period mapping information of the downstream node. The period mapping information corresponding to each downstream node is pre-configured. If the current node is a next hop node of the source node, the transmission period corresponding to the current node is obtained according to the first transmission time period label value corresponding to the source node and the period mapping information corresponding to the current node.

At S420, the intermediate node transmits the packet in the transmission period corresponding to the packet in the intermediate node.

FIG. 8 is used as an example for description. A second device 200 (intermediate node) corresponds to a first transmission time period label value T2. Period mapping information X3 and period mapping information X4 are respectively pre-configured for downstream nodes of the second device 200, i.e., a third device 300 and a fourth device 400. The packet 1600 carries a first transmission time period label value T3 and is transmitted from the second device 200 to the third device 300. The third device 300 obtains a period label value T0 of the current node according to the first transmission time period label value T3 and the period mapping information X3. The third device 300 forwards the packet in the corresponding transmission period, i.e., a period T0, according to the first transmission time period label value T0. The fourth device 400 receives the packet 1600 carrying the period label value T0, and obtains a first transmission time period label value T1 corresponding to the current node according to the first transmission time period label value T0 and the pre-configured period mapping information X4 of the fourth device 400. The fourth device 400 forwards the packet in the corresponding transmission period according to the first transmission time period label value T1.

FIG. 11 is a flowchart of a packet processing method according to an embodiment of the present disclosure. As shown in FIG. 11, the packet processing method may be applied to, for example, but not limited to, a sink node/device. In the embodiment shown in FIG. 11, the packet processing method may include, but not limited to, the following steps S500 and S600.

At S500, a packet is received, where the packet carries a period label, the period label includes a first transmission time period label value and a second transmission time period label value, the first transmission time period label value is used for identifying a transmission period corresponding to the packet in the sink node, and the second transmission time period label value is used for identifying a transmission sub-period corresponding to the packet in the sink node. The transmission sub-period of the sink node is within the transmission period of the sink node.

At S600, the packet is transmitted according to the first transmission time period label value and the second transmission time period label value.

In an embodiment, S600 may further include the following steps S611 and S620.

At S611, a transmission period corresponding to the packet in the sink node is obtained according to the first transmission time period label value.

At S620, the transmission sub-period corresponding to the packet in the sink node is obtained according to the second transmission time period label value t.

In another embodiment, the packet processing method may further include the following steps S612 and S620.

At S612, the transmission period corresponding to the packet in the sink node is obtained according to the first transmission time period label value T and period mapping information X of the sink node.

At S620, the transmission sub-period of the transmission period corresponding to the packet in the sink node is obtained according to the second transmission time period label value t.

The sink node may obtain the transmission period corresponding to the packet in the sink node according to the first transmission time period label value T, and then obtain the transmission sub-period corresponding to the packet in the sink node according to the second transmission time period label value t. The transmission sub-period is within the transmission period. With this exemplary method, the transmission of packets in the network with smaller delay jitter can be achieved.

In another embodiment, S600 may further include the following steps S630 and S640.

At S630, the sink node obtains a transmission period corresponding to the packet in the sink node according to the first transmission time period label value Tn corresponding to the sink node and the period mapping information X corresponding to the sink node.

At S640, the transmission sub-period of the transmission period corresponding to the packet in the sink node is obtained according to the second transmission time period label value t.

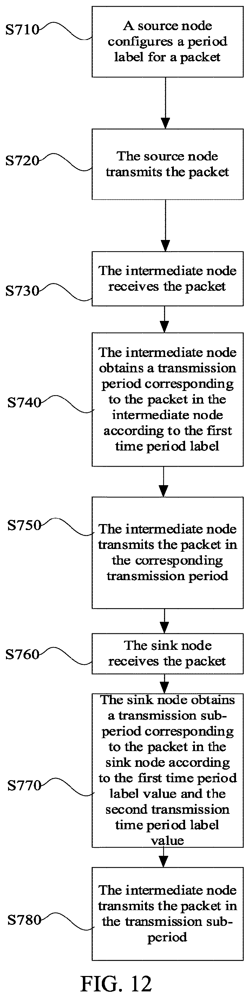

FIG. 12 is a flowchart of a packet processing method according to an embodiment of the present disclosure. As shown in FIG. 12, the packet processing method may include, but not limited to, the following steps S710, S720, S730, S740, S750, S760, S770, and S780.

At S710, a source node configures a period label for a packet. The period label includes a first time period label and a second transmission time period label value.

At S720, the source node transmits the packet.

At S730, the intermediate node receives the packet.

At S740, the intermediate node obtains a transmission period corresponding to the packet in the intermediate node according to the first time period label.

At S750, the intermediate node transmits the packet in the transmission period.

At S760, the sink node receives the packet.

At S770, the sink node obtains a transmission sub-period corresponding to the packet in the sink node according to the first time period label value and the second transmission time period label value.

At S780, the sink node sends the packet in the transmission sub-period.

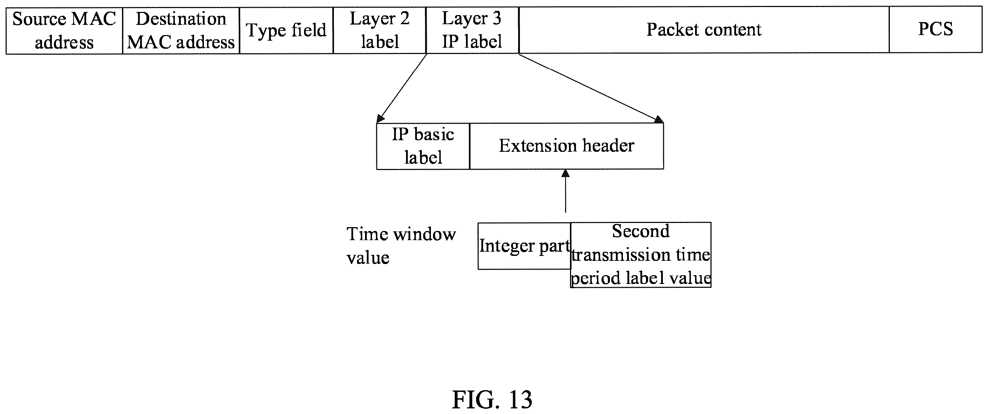

FIG. 13 is a schematic diagram of a second transmission time period label value carried in a packet according to an embodiment of the present disclosure. As shown in FIG. 13, the second transmission time period label value is carried in the packet, and may be carried together with the first transmission time period label value of the packet. On the network, when the intermediate device performs forwarding, the intermediate device forwards the packet according to only the first transmission time period label value, and ignores the second transmission time period label value carried in the packet. When the packet arrives at a destination sink device, the sink device determines the transmission period according to the second transmission time period label value, and then determines the current transmission sub-period according to the second transmission time period label value. With the above method, the fluctuation of the packet in one forwarding period is reduced, and the delay jitter of the packet may be a smaller t, such that the deterministic transmission of information with smaller jitter is achieved. The embodiments of the present disclosure provide an example of using the CSQF technology, but are not limited thereto. The embodiments of the present disclosure are also applicable to the TSN technology.

By forwarding the client packet according to the second transmission time period label value in the sink device, end-to-end forwarding with smaller delay jitter can be achieved. The end-to-end forwarding delay effect with smaller delay and jitter does not require the sink node device to implement accurate transmission at any moment. It should be noted that the transmission period corresponding to the packet in the source node may also be determined according to the first transmission time period label value, and the transmission sub-period of the transmission period corresponding to the packet in the source node may also be determined according to the second transmission time period label value. With the above method, the moment at which the sink node receives the client packet and the moment at which the source node receives the client packet are controllable and are not affected by the delay and jitter of the intermediate device.

In some scenarios, the delay jitter are required to be less than corresponding target values. If an end-to-end forwarding period value T of the network is 40 us, when a client packet requires an end-to-end forwarding period value t of 5 us, it is equivalent to dividing the forwarding period of the network into 8 equal parts, with the minimum unit of the forwarding period label value being 5 us, i.e., 1/8 T. The forwarding period value T is a basic forwarding period for all devices. The forwarding period value t that needs to be achieved is a smaller forwarding period that is expected to be achieved. The forwarding period value T (i.e., the basic forwarding period) corresponding the transmission moment of the packet is the transmission period, and the smaller forwarding period value t corresponding the transmission moment of the packet (i.e., the smaller forwarding period expected to be achieved) is the transmission sub-period. In some scenarios, the transmission sub-period is within the transmission period. In the present disclosure, the forwarding period value T (i.e., the basic forwarding period) corresponding the forwarding moment of the packet in the current node is determined according to the first transmission time period label value Tn carried in the packet, i.e., the transmission period can be obtained according to the first transmission time period label Tn. The smaller forwarding period value t (i.e., the smaller forwarding period expected to be realized) corresponding the forwarding moment of the packet in the current node is determined according to the second transmission time period label value carried in the packet, i.e., the transmission sub-period can be obtained according to the second transmission time period label value tn.

In an embodiment, the first transmission time period label Tn and the second transmission time period label value tn may be set in advance. For example, a transmission path, delay, bandwidth, and queue resources of the packet are planned in advance, a period parameter and the like is determined, and a first transmission time period label Tn and a second transmission time period label value tn of each node device are generated and distributed to the corresponding node device.

In another embodiment, the second transmission time period label value tn may be determined according to a difference between the transmission moment of the packet in the source device and a start time of the transmission period.

For ease of understanding, an example is described below. Assuming that the difference between the transmission moment of the packet in the source device and the start time of the transmission period is ΔT, the value of the difference ΔT is converted into an integer value in units of 1/8 T, i.e., an integer multiple of one eighth of the basic forwarding period. This example uses 1/8 as an example, and different values may be set according to different scenarios in practice. When AT is greater than 0 and less than 1*1/8 T, the second transmission time period label value tn is 0; when ΔT is greater than 1/8 T and less than 2/8 T, the second transmission time period label value in is 1; when ΔT is greater than 2/8 T and less than 3/8 T, the second transmission time period label value tn is 2; ...; when ΔT is greater than 7/8 T and less than T, the second transmission time period label value tn is 7. The second transmission time period label value tn may be part of the content of the period label. For example, the first transmission time period label value Tn may be used as a high-order part of a new time period label, and the second transmission time period label value tn may be used as a low-order part of the new time period label. A new time label value includes the first transmission time period label value Tn and the second transmission time period label value tn. The new time label value is carried in the packet transmitted from the source device.

For example, the source device generates a time label value according to a forwarding period of 5 us. A high-order part of the generated time label value is a result of forwarding according to a forwarding period T=40 us. A low-order part of the generated time label value is a second transmission time period label value, i.e., a result generated according to a sub-period 1/8 T.

During forwarding, the intermediate device on the network only pays attention to the high-order part of the time period label value, i.e., the first transmission time period label value Tn part, processes the high-order part of the time period label value as an original time period label value, ignores but retains the low-order part of the transmission time period label value, i.e., the second transmission time period label value tn part, and transmits the low-order part of the time period label value as a packet content. The intermediate device on the network may change the transmission period label value part of the time period label, but does not change the sub-period label value part of the time period label value.

An embodiment of the present disclosure provides a packet processing method, applied to a sink node, the method including: storing a packet according to a first period configuration; transmitting the packet according to a first transmission time period label value; storing the transmitted packet according to a second period configuration to form a first queue for receiving the packet and a second queue for transmitting the packet; determining a transmission sub-period corresponding to the queues according to a second transmission time period label value; and transmitting the packet in the transmission sub-period.

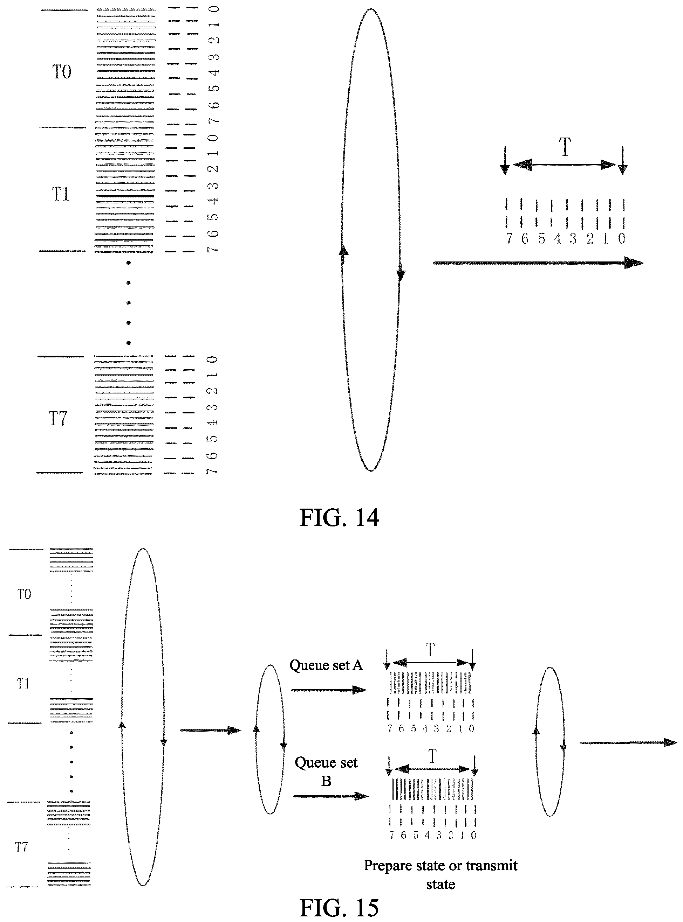

FIG. 14 is a schematic diagram of packet forwarding according to an embodiment of the present disclosure. As shown in FIG. 14, when a packet is transmitted to a sink device, the sink device forwards the packet according to all first time period labels, i.e., performing forwarding enqueueing according to a transmission period label value determined by a first transmission time period label value, and performs fine secondary enqueueing on the packet in the same queue according to a sub-period label value of the time period label value. The transmission period label value of the time period label value has 3 bits indicating a total of 8 time window values, and needs to be enqueued in 8 queues. The transmission sub-period label value part of the time period label value also has 3 bits indicating a total of 8 time window values, so each original queue is divided into 8 new queues, thus obtaining a total of 64 queues.

In an embodiment, the device 4 may directly enqueue the packet according to contents of all parts of the time period label value, and directly enqueue and buffer the packet in 64 queues. If the forwarding period label value of the time period label value has 3 bits, indicating 8 different time window values, and 8 queues are required for enqueueing according to the forwarding period label value of the time period label value. If the sub-period label value part of the time period label value also has 3 bits, 8 queues are also required for enqueueing according to the sub-period label value part of the time period label value. Therefore, a total of 64 queues are required. With the above method, when the transmission period label value of the time period label value, i.e., the first transmission time period label value part, has 3 bits (8 time window values), and the transmission sub-period label value of the time period label value, i.e., the second transmission time period label value label value part, also has 3 bits (8 time window values), the device 200 and the device 300 forward the packet according to the first transmission time period label value part having 3 bits (8 time window values) on the bearer network in FIG. 1, so the forwarding of the packet by the device 200 and the device 300 requires only 8 queues to cache the customer packet from upstream. Assuming that the forwarding period T of the device 200 and the device 300 is equal to 40 us (where one time window value represents a time unit of 40 us), the fluctuation range of the delay of the client packet during the forwarding of the client packet by the device 200 and the device 300 is within 40 us. A sink node device 400 forwards the packet according to all contents of the time period label value, i.e., according to the first transmission time period label value and the second transmission time period label value (6 bits, 64 time window values). The packet is enqueued and cached in 64 queues, and forwarded according to a forwarding period of 5 us, which is one eighth of the forwarding period on the device 200 and the device 300. The fluctuation range of the delay of the packet during forwarding by the device 400 is within only 5 us, which is one eighth of the delay fluctuation range of the client packet in the device 2 and the device 3. This is the effect that the second transmission time period label value part of the time period label value provides on the sink device.

In end-to-end transmission in a network system, a difference between a packet and a position of a boundary of a time window is carried in the packet, such that an intermediate network device in the network system may forward the packet according to a forwarding period value T (i.e., basic forwarding period), and determine a transmission period according to a first transmission time period label value Tn. Although the forwarding delay fluctuation of the packet in the intermediate network device is large, a sink device forwards the packet according to a smaller forwarding period value t (i.e., a smaller forwarding period that is expected to be achieved), i.e., determines a transmission sub-period according to a second transmission time period label value tn. As such, a small fluctuation of the delay of the packet can still be achieved.

Using the technology of FIG. 1 as an example, to achieve a small fluctuation of the delay of the packet, all intermediate network devices such as the devices 200 and 300 need to forward the packet according to a transmission period (T). The devices 200 and 300 have a relatively large transmission period (T). Even if the devices 200 and 300 are capable of forwarding a packet according to a transmission sub-period value (t), the client packet on the devices 200 and 300 need to be enqueued and cached in 64 queues, which occupies a large number of queue resources of the devices 200 and 300. In other words, in the above example, the sink node sets up an enqueue queue according to all time window values. When all the time window values each have 3+3=6 bits, these bits indicate a total of 64 different time window values. The sink device requires 64 queues to cache the customer packet corresponding to the time window values, i.e., a large number of queues are required.

In an embodiment, the devices 200 and 300 only need to enqueue and cache the customer packet according to 8 queues corresponding to the first transmission time period label value, such that queue resources on the devices 200 and 300 can be effectively reduced.

FIG. 15 is a schematic diagram of packet forwarding according to an embodiment of the present disclosure. As shown in FIG. 15, two stages of queues are used for packet enqueueing. For the first stage of queue, queue management is still performed according to the number of queues in the devices 200 and 300, i.e., according to the first transmission time period label value Tn part of the time period label value. In this embodiment, the devices 200 and 300 only require 8 queues to cache the client packet. The first stage of queue forwards and outputs the packet according to the unit represented by the first transmission time period label value part of the time period label value (i.e., period T), i.e., forwards and outputs the client packet to the second stage of queue in a previous time period. The second stage of queue includes two queue sets: a queue set A and a queue set B. Each queue set is set according to the time window value of the second transmission time period label value part. In this embodiment, the sub-period label value part has 3 bits, indicating 8 time window label values, so 8 queues are set in each set. At any moment, one of the two queue sets is in a prepare state for receiving the packet outputted by the first stage of queue, and the other queue set is in a transmit state for forwarding and outputting the customer packet cached in the queue. The total working time (forward state or receive state) of each queue set is still one transmission period T (the period corresponding to the high-order part of the time window value), and the start time and end time of each queue set are completely consistent with the start time and end time of the transmission period of the first stage of queue. At any moment, one of the queue sets in the second stage is in the receive state, and the other queue set is in the transmit state. After one transmission period T (the period corresponding to the high-order part of the time window value) ends, one of the queue sets is switched from the prepare state to the transmit state, and the other queue set is switched from the transmit state to the prepare state. When one queue set is in the prepare state, the first stage of queue always performs forwarding and outputting one transmission period T in advance, and the other queue set in the receive state in the second stage of queue receives the customer packet from the first stage of queue, and enqueues the customer packet in the second stage of queue according to the sub-period label value part of the second transmission time period label value. After one forwarding time period T, all customer packets in the first stage of queue have been transferred to the second stage of queue. In the next forwarding period T, the queue set in the prepare state is switched to the transmit state. In this embodiment, the queue set in the transmit state in the second stage of queue performs outputting and forwarding according to a forwarding period which is a sub-period 1/8 T. In each sub-period, forwarding of one packet in the second stage of queue is completed. In one forwarding period T, forwarding of customer packets of all queues in this queue set is completed. Then, the queue set in the transmit state is switched to the receive state in the next forwarding time period T, to receive packets forwarded and outputted from the first stage of queue. With the setting of the two stages of queues, queues in the first stage are set according to the forwarding period label value part of the first transmission time period label value, so only eight queues are required. Queues in the second stage are set according to the sub-period label value part of the second transmission time period label value, with 8 queues being required by each queue set, so a total of 16 queues are required by the two queue sets. In this way, the sink device only requires a total of 8+16=24 queues (which is the sum of the number of queues corresponding to the forwarding period label value part of the time period label value and 2 times the number of queues corresponding to the sub-period label value part of the time period label value), such that the total number of queues is reduced compared with the above example where there is only one stage of queue requiring 64 queues.

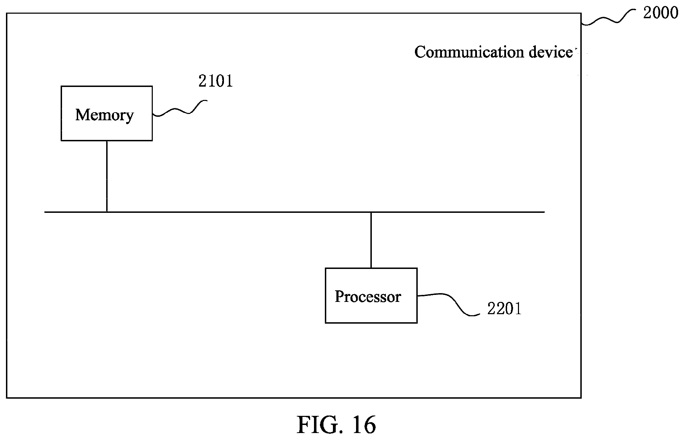

FIG. 16 is a schematic structural diagram of a communication device according to an embodiment of the present disclosure. As shown in FIG. 16, the communication device 2000 includes a memory 2100 and a processor 2200. The device may include one or more memories 2100 and one or more processors 2200. FIG. 16 uses one memory 2101 and one processor 2201 as an example. The memory 2101 and the processor 2201 in the communication device may be connected by a bus or in other ways. Connection by a bus is used as an example in FIG. 16.

The memory 2101, as a computer-readable storage medium, may be configured for storing a software program, a computer-executable program, and modules, for example, program instructions/modules corresponding to the method provided in any embodiment of the present disclosure. The processor 2201 runs the software program, instructions, and modules stored in the memory 2101, to implement the method.

The memory 2101 may mainly include a program storage area and a data storage area. The program storage area may store an operating system, and an application required by at least one function. In addition, the memory 2101 may include a high-speed random access memory, and may also include a nonvolatile memory, e.g., at least one magnetic disk storage device, flash memory device, or other nonvolatile solid-state storage device. In some examples, the memory 2101 further includes memories located remotely from the processor 2201, and the remote memories may be connected to the device via a network. Examples of the network include, but not limited to, the Internet, an intranet, a local area network, a mobile communication network, and combinations thereof.

An embodiment of the present disclosure provides a computer-readable storage medium, storing computer-executable instructions which, when executed by a processor, causes the processor to implement the packet processing method or the packet transmission method provided in any embodiment of the present disclosure.

An embodiment of the present disclosure provides a computer program product, including a computer program or computer instructions stored in a computer-readable storage medium, where the computer program or the computer instructions, when read from the computer-readable storage medium and processed by a processor of a computer, causes the computer device to implement the packet processing method or the packet transmission method provided in any embodiment of the present disclosure.

The system architecture and application scenarios described in the embodiments of the present disclosure are for the purpose of illustrating the technical schemes of the embodiments of the present disclosure more clearly, and do not constitute a limitation on the technical schemes provided in the embodiments of the present disclosure. Those having ordinary skills in the art may know that with the evolution of the system architecture and the emergence of new application scenarios, the technical schemes provided in the embodiments of the present disclosure are also applicable to similar technical problems.

Those having ordinary skills in the art can understand that all or some of the steps in the methods disclosed above and the functional modules/units in the system and the apparatus can be implemented as software, firmware, hardware, and appropriate combinations thereof.

In a hardware implementation, the division of the functional modules/units mentioned in the above description does not necessarily correspond to the division of physical components. For example, one physical component may have multiple functions, or one function or step may be jointly executed by several physical components. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information passing medium.

As used in this specification, the terms "component," "module," "system," and the like are used to denote computer-related entities, hardware, firmware, a combination of hardware and software, software, or software in execution. For example, a component may be, but not limited to, a process running on a processor, a processor, an object, an executable file, a thread of execution, a program, or a computer. An application running on a computing device and the computing device may both be illustrated as components. One or more components may reside in a process or thread of execution. A component may be located on one computer or distributed on two or more computers. In addition, the components may be executed from various computer-readable media having various data structures stored therein. The components may communicate via local and/or remote processes such as in accordance with a signal having one or more data packets (e.g., data from one component interacting with another component in a local system, distributed system, and/or across a network such as the Internet with other systems via the signal).

Although some embodiments of the present disclosure are described above with reference to the accompanying drawings, these embodiments are not intended to limit the protection scope of the present disclosure. Any modifications, equivalent replacements and improvements made by those having ordinary skill sin the art without departing from the scope and essence of the present disclosure shall fall within the protection scope of the present disclosure.

## Claims

1. A packet processing method, applied to a source node, the method comprising:
configuring a period label for a packet, wherein the period label comprises a first time period label and a second transmission time period label value, the first time period label is used for identifying a transmission period corresponding to the packet in each downstream node, and the second transmission time period label value is used for identifying a transmission sub-period of the packet in a source node and a sink node; and
transmitting the configured packet to the downstream node.

2. The method of claim 1, wherein the first time period label comprises at least one of:
a first transmission time period label value corresponding to each downstream node; or
a first transmission time period label value corresponding to the source node.

3. The method of claim 2, wherein the method further comprises:
obtaining the transmission period corresponding to the packet in each downstream node according to the first transmission time period label value; and
obtaining the transmission sub-period corresponding to the packet in the source node and the sink node according to the second transmission time period label value, wherein the transmission sub-period is within the transmission period.

4. The method of claim 2, wherein:
period mapping information is respectively pre-configured for each downstream node; and
the method further comprises:
obtaining the transmission period corresponding to the packet in each downstream node according to the first transmission time period label value and the period mapping information of the downstream node; and
obtaining the transmission sub-period corresponding to the packet in the source node and the sink node according to the second transmission time period label value, wherein the transmission sub-period is within the transmission period.

5. A packet processing method, applied to an intermediate node, the method comprising:
receiving a packet, wherein the packet carries a period label, the period label comprises a first time period label and a second transmission time period label value, the first time period label is used for identifying a transmission period corresponding to the packet in each downstream node, and the second transmission time period label value is used for identifying a transmission sub-period corresponding to the packet in a sink node; and
transmitting the packet according to the first time period label.

6. The method of claim 5, wherein the first time period label comprises at least one of:
a first transmission time period label value corresponding to each downstream node; or
a first transmission time period label value corresponding to the intermediate node.

7. The method of claim 6, wherein transmitting the packet according to the first time period label comprises:
obtaining the transmission period corresponding to the packet in each downstream node according to the first transmission time period label value corresponding to the downstream node; and
transmitting the packet in the transmission period.

8. The method of claim 6, wherein:
period mapping information is respectively pre-configured for each downstream node; and
transmitting the packet according to the first time period label comprises:
obtaining the transmission period corresponding to the packet in each downstream node according to the first transmission time period label value and the period mapping information of the downstream node; and
transmitting the packet in the transmission period.

9. A packet processing method, applied to a sink node, the method comprising:
receiving a packet, wherein the packet carries a period label, the period label comprises a first transmission time period label value and a second transmission time period label value, the first transmission time period label value is used for identifying a transmission period corresponding to the packet in the sink node, and the second transmission time period label value is used for identifying a transmission sub-period corresponding to the packet in the sink node; and
transmitting the packet according to the first transmission time period label value and the second transmission time period label value.

10. The method of claim 9, wherein transmitting the packet according to the first transmission time period label value and the second transmission time period label value comprises:
obtaining a transmission period corresponding to the packet in the sink node according to the first transmission time period label value;
obtaining a transmission sub-period corresponding to the packet in the sink node according to the second transmission time period label value; and
transmitting the packet in the transmission sub-period that is within the transmission period.

11. The method of claim 9, wherein:
period mapping information is pre-configured for the sink node; and
transmitting the packet according to the first transmission time period label value and the second transmission time period label value comprises:
obtaining the transmission period corresponding to the packet in the sink node according to the first transmission time period label value and the pre-configured period mapping information of the sink node;
obtaining the transmission sub-period corresponding to the packet in the sink node according to the second transmission time period label value, wherein the transmission sub-period is within the transmission period; and
transmitting the packet in the transmission sub-period that is within the transmission period.

12. A packet processing method, applied to a sink node, the method comprising:
storing a packet according to a first period configuration;
transmitting the packet according to a first transmission time period label value;
storing the transmitted packet according to a second period configuration to form a first queue for receiving the packet and a second queue for transmitting the packet;
determining a transmission sub-period corresponding to the queues according to a second transmission time period label value; and
transmitting the packet in the transmission sub-period.

13. A packet transmission method, comprising:
configuring, by a source node, a period label for a packet, wherein the period label comprises a first time period label and a second transmission time period label value, the first time period label is used for identifying a transmission period corresponding to the packet in each downstream node, and the second transmission time period label value is used for identifying a transmission sub-period of the packet in the source node and a sink node; and
transmitting, by the source node, the packet;
receiving, by an intermediate node, the packet;
obtaining, by the intermediate node, a transmission period corresponding to the packet in the intermediate node according to the first time period label;
transmitting, by the intermediate node, the packet in the transmission period corresponding to the packet in the intermediate node;
receiving, by the sink node, the packet;
obtaining, by the sink node, a transmission sub-period corresponding to the packet in the sink node according to the first time period label value and the second transmission time period label value; and
transmitting, by the sink node, the packet in the transmission sub-period that is within the transmission period.

14. The method of claim 13, wherein the first time period label comprises at least one of:
first transmission time period label values respectively corresponding to the intermediate node and the sink node; or
a transmission time period label value corresponding to the source node.

15. The method of claim 14, wherein obtaining, by the intermediate node, a transmission period corresponding to the packet in the intermediate node according to the first time period label comprises:
obtaining, by the intermediate node, the transmission period corresponding to the packet in the intermediate node according to the first transmission time period label value corresponding to the intermediate node; and
obtaining, by the sink node, a transmission sub-period corresponding to the packet in the sink node according to the first time period label value and the second transmission time period label value comprises:
obtaining, by the sink node, a transmission period corresponding to the packet in the sink node according to the first transmission time period label value corresponding to the sink node; and
obtaining, by the sink node, the transmission sub-period corresponding to the packet in the sink node according to the second transmission time period label value.

16. The method of claim 14, wherein:
period mapping information is pre-configured for the intermediate node and the sink node; and
obtaining, by the intermediate node, a transmission period corresponding to the packet in the intermediate node according to the first time period label comprises:
obtaining, by the intermediate node, the transmission period corresponding to the packet in the intermediate node according to the first transmission time period label value corresponding to the intermediate node and the period mapping information corresponding to the intermediate node; and
obtaining, by the sink node, a transmission sub-period corresponding to the packet in the sink node according to the first time period label value and the second transmission time period label value comprises:
obtaining, by the sink node, a transmission period corresponding to the packet in the sink node according to the first transmission time period label value corresponding to the sink node and the period mapping information corresponding to the sink node; and
obtaining, by the sink node, the transmission sub-period corresponding to the packet in the sink node according to the second transmission time period label value, wherein the transmission sub-period is within the transmission period corresponding to the packet in the sink node.

17. A communication device, comprising: a memory, a processor, and a computer program stored in the memory and executable by the processor, wherein the computer program, when executed by the processor, causes the processor to perform the packet processing method of any one of claims 1 to 12.

18. A communication system, comprising:
at least one processor; and
at least one memory, configured for storing at least one program,
wherein the at least one program, when executed by the at least one processor, causes the at least processor to perform the packet transmission method of any one of claims 13 to 16.

19. A computer-readable storage medium, storing computer-executable instructions, wherein the computer-executable instructions, when executed by a processor, causes the processor to perform the packet processing method of any one of claims 1 to 12 and/or the packet transmission method of any one of claims 13 to 16.

20. A computer program product, comprising a computer program or computer instructions stored in a computer-readable storage medium, wherein the computer program or the computer instructions, when read from the computer-readable storage medium and executed by a processor of a computer, causes the computer device to perform the packet processing method of any one of claims 1 to 12 and/or the packet transmission method of any one of claims 13 to 16.
